Europäisches Patentamt

European Patent Office

Office européen des brevets

(19)

(11) **EP 0 786 209 B1**

(12) **EUROPEAN PATENT SPECIFICATION**

(45) Date of publication and mention
of the grant of the patent:
**17.04.2002 Bulletin 2002/16**

(51) Int Cl.⁷: **A23D 9/00**, A23D 7/00,
A21D 2/16, A21D 13/08

(21) Application number: **97200091.3**

(22) Date of filing: **14.01.1997**

(54) **Lamination fat product**

Geschichtetes Fettprodukt

Produit gras feuilleté

(84) Designated Contracting States:
**AT BE CH DE DK ES FI FR GB GR IE IT LI NL PT SE**

(30) Priority: **23.01.1996 EP 96200157**

(43) Date of publication of application:
**30.07.1997 Bulletin 1997/31**

(73) Proprietor: **CSM Nederland B.V.**
**1112 XE Diemen (NL)**

(72) Inventor: **Van der Schee, Gerrit Leendert**
**c/o Unilever Res.**
**3133 AT Vlaardingen (NL)**

(74) Representative: **Jorritsma, Ruurd et al**
**Nederlandsch Octrooibureau**
**Scheveningseweg 82**
**P.O. Box 29720**
**2502 LS Den Haag (NL)**

(56) References cited:
WO-A-93/24017          WO-A-94/16572
WO-A-94/19953

• PATENT ABSTRACTS OF JAPAN vol. 6, no. 154 (C-119), 14 August 1982 & JP 57 074041 A (ASAHI DENKA KOGYO KK), 10 May 1982,
• PATENT ABSTRACTS OF JAPAN vol. 12, no. 213 (C-505), 17 June 1988 & JP 63 014675 A (UEDA SEIYU KK), 21 January 1988,

**Description**

The invention relates to a lamination fat product having a continuous fat phase and optionally a dispersed aqueous phase wherein the fat of the fat phase comprises less than 10 wt% trans unsaturated fatty acid residues.

Lamination fat products, e.g. margarines and shortenings, are used in the preparation of laminated dough e. g. for puff pastry, croissants, Danish pastry and the like. In order to be able to get a good dough the lamination fat product must be plastic and have the right firmness. If it is too soft, the fat will get smeared into the flour part of the dough (pre-dough). If it is too hard, the fat will get pushed out of the dough on the sides and it will pierce through the pre-dough layers during lamination. In neither case will a dough with the desired plurality of very thin, extended pre-dough and fat layers be obtained. If the fat product has the right firmness but is not plastic enough, during lamination, the fat product will break up, not giving sufficiently extended layers but instead layers of too small surface that are too thick. Such defects adversely affect the dough making process as well as the resulting baked product. The primary factor determining the consistency (firmness and plasticity) of the fat product is the composition of the fat used for making the product. The optimal firmness and plasticity depend on the intended application. For example, for croissant and Danish pastry a less firm product is usually chosen than for puff pastry. The fat product must have the right consistency in the bakery in which it is used. Whereas the consistency of the pre-dough varies only to a moderate extent with temperature, the consistency of the lamination fat product typically fluctuates much more with the temperature. Since for a smooth laminated dough making process, the consistency of the pre-dough and that of the lamination fat must be matched to each other, different fat products are supplied for the same application to customers working in different climatic conditions.

Whereas it is widely accepted that, in order to obtain satisfactory results, the consistency of the fat product should be appropriate in view of the intended application and the temperature at which the product is used, this is not a sufficient condition. There are still mechanisms involved in making puff pastry, croissants or the like, that are not understood. Different lamination fat products having similar consistency may show rather different performance in the actual application. Therefore, the quality of lamination fat products cannot be properly assessed without evaluating the products in dough preparation and baking tests.

WO 94/16572 describes a puff pastry margarine having a low content of trans fatty acids and comprising 3-30% $H_3$, 25-60% $H_2U$ and <65% $HU_2+U_3$ triglycerides wherein H indicates saturated $C_{16}$- $C_{22}$ fatty acids and U indicates unsaturated $C_{18}$- $C_{22}$ fatty acids. Examples are given of lamination margarines comprising as fat, mixtures of palmstearin, palm midfraction, palm oil and soyabean oil. Palm midfraction is very expensive. None of the fatsystems disclosed in this document will have a flat N-line, and are therefore not useful for application at different temperatures.

WO 94/19953 describes bakery fat products the fat of which comprises 5-50% $S_2U$, <35% $U_2S+U_3$ and 0-37% $S_3$ triglycerides wherein S indicates saturated and trans-unsaturated $C_{12}$-$C_{24}$ acids and U indicates mono (cis) or poly unsaturated fatty acids having at least 18 carbon atoms. The bakery fats of WO 94/19953 are also intended for non-lamination products, e.g. for cakes and biscuits. Since making these products does not require lamination, the properties of the fat product are less critical. Specifically for lamination purposes, WO 94/19953 describes a fat product the fat of which is free of trans fatty acids, and which comprises 12.5% BOB, 5.0% BOO, 17.5% StOSt, 10% palm stearin, 55% sunflower oil (B=Behenic acid $C_{22}$, O=Oleic acid $C_{18:1}$, St=Stearic acid $C_{18}$). The BOB and BOO components are each made by enzymic interesterfication. The StOSt component is not described further except that it is stated to contain 84% of StOSt. Making such components is very complex. Moreover, the N20 value of this fatmix is relatively low, while its $\dfrac{N_{15}-N_{25}}{N_{20}}$-value is relatively high.

The raw materials involved are expensive. As a result the product exemplified in WO 94/19953 for lamination purposes must be prohibitively expensive, while its performance at different lamination temperatures is not optimal.

As described above, the consistency of lamination fat products tends to fluctuate substantially as a function of temperature. For customers working under different climatic conditions this is usually compensated for by supplying tailor-made products. However, this is an expensive solution because of the complexity and increased stock levels associated with having a larger number of products to provide the same volume of product. Furthermore, tailor-made products do not provide a solution for rapid temperature fluctuations caused by the weather and for the temperature increase that happens during the day in many bakeries because of the heat of the ovens. Therefore there is a need for lamination fat products with improved temperature tolerance, meaning that the consistency of the fat product fluctuates less with changes in temperature in the range in which dough preparation takes place. Keeping in mind also that it takes considerable time for blocks of fat product taken from storage to adapt to a different temperature, this range can be taken as typically 15-25°C. Of course products with improved temperature tolerance will only be acceptable to customers if with respect to other properties, e.g. content of trans acids, quality of the resulting baked product and ease of dough preparation, they are as good or better than products they replace. Also their price should not be notably higher. We have now found that this objective can be met to a considerable degree.

The invention provides a lamination fat product with improved temperature tolerance, having a continuous fat phase and optionally a dispersed aqueous phase, wherein the fat of the fat phase comprises:

* less than 10wt% trans unsaturated fatty acid residues
* 25-70wt% preferably 30-65 wt% liquid triglyceride oil (A) that does not contain solid fat at 20°C and that contains at least 70 wt% cis unsaturated fatty acid residues
* at least 10wt% $C_{16+}$ fat (B) having a saturated fatty acid content of at least 60wt% and comprising at least 30wt% $H_3$ triglycerides wherein H indicates $C_{16}$, $C_{18}$, $C_{20}$ and $C_{22}$ acids.
* optionally a $H_2M$ fat (C), preferably in an amount such that the fat of the fat phase comprises at least 0.5wt%, more preferably at least 2wt% $H_2M$ triglycerides wherein M indicates $C_8$, $C_{10}$, $C_{12}$, and $C_{14}$ fatty acid residues.
* optionally up to 25wt% other fat (D) having a slip melting point of at least 38°C,
* while the total of fats (C) and (D) is always more than 0wt%

and wherein the fat has solid fat contents of

* $N_{20}$ = 28-50
* $N_{35}$ = 10-23
* $(N_{15}-N_{25})/N_{20} \leq 0.40$

Preferred embodiments are given in claims 2-10. The invention also encompasses the use of the present fat product in the preparation of a laminated dough.

We found that $(N_{15}-N_{25})/N_{20}$ is an important factor in determining the temperature tolerance of the fat product. The lower this factor, generally speaking, the better the temperature tolerance. For the products exemplified in WO 94/16572 this factor was 0.50 or higher. For a series of 6 commercial lamination fat products we found values from 0.41 to 0.91.

The $N_x$ value is a measure for the solid fat content of a fat at x°C. It can be measured by NMR as described in Fette, Seifen, Anstrichmittel, 80, (1978), 180-186. In sample preparation, the following stabilisation is applied: heating to 80°C, 10 minutes at 60°C, 60 minutes at 0°C and 30 minutes at measuring temperature.

With the choice of fats as described above, we found that products with $(N_{15}-N_{25})/N_{20}$ well below 0.40 can readily be made. Preferably this factor is less than 0.35. Fats with very low factors can also be made, but we found that this may cause problems. The fat product may become softer than optimal or the eating quality of the resulting baked product may become less good. Therefore, it is preferred for $(N_{15}-N_{25})/N_{20}$ to be at least 0.1, more preferably at least 0.15. For optimal results, we found this factor is best chosen in the range 0.20-0.30.

For optimal firmness of the products we further found it desirable to choose $N_{20}$=28-42.

The fat preferably comprises less than 6%, more preferably 0-4%, especially 0-2% trans unsaturated fatty acid residues. The content of trans-unsaturated fatty acids of a fat can suitably be measured as elaidic acid as described in JAOCS 54, (1977), 208.

In order to obtain a fat having the above described solid fat contents profile and trans-unsaturated fatty acid contents as described above together with plasticity in the fat product made with the fat and a good quality baked endproduct, we found it necessary for the fat to comprise liquid oil (A), $C_{16}$+fat (B), $H_2M$ fat (C) and/or other fat (D) as described above.

By liquid oil is meant triglyceride oil that does not contain solid fat at 20°C and that contains at least 70wt%, preferably at least 75wt%, most preferably at least 80wt% cis unsaturated fatty acid residues. Preferably it does not contain solid fat at 15°C. This definition thus excludes palm oil olein-fractions as liquid oil. Examples of oils that can suitably be used as liquid oil are soyabean oil, low erucic acid rapeseed oil, sunflower oil, cottonseed oil, maize oil, groundnut oil, etc and combinations of 2 or more of such oils. The liquid oil is present in the fat in an amount of 25-70wt%, preferably 30-65wt%, most preferably 45-60wt%. We found that compared with the corresponding conventional products that the present products are intended to replace, the present products typically contain more liquid oil. This is advantageous from a nutritional point of view. The present products typically contain less trans+SAFA (saturated fatty acids) and more UFA (cis-unsaturated fatty acids, especially PUFA (all-cis poly unsaturated fatty acids).

The fatty acid composition of a fat can suitably be determined by GLC of the FAME (fatty acid methyl esters) of the fat, e.g. as described in EP 78568.

The $C_{16+}$ fat (B) must have a SAFA content of at least 60wt%. It must comprise at least 30wt% $H_3$ triglycerides wherein H indicates the saturated fatty acids $C_{16}$, $C_{18}$, $C_{20}$ and $C_{22}$. The subscript indicates the number of carbon atoms in the fatty acid chain. The $C_{16+}$ fat (B) preferably is fat that comprises 80-100wt%, especially 90-100wt% of fatty acid residues that contain 16 or 18 carbon atoms in the chain (including unsaturated acids of such chain length, e.g. oleic acid ($C_{18:1}$), linoleic acid ($C_{18:2}$) and linolenic acid ($C_{18:3}$). Unsaturated fatty acids are indicated by $C_{x:y}$ wherein x indicates the number of carbon atoms in the fatty acid chain and y indicates the number of double bonds in the fatty acid chain). It is further preferred that $C_{16+}$ fat (B) comprises at least 30wt% $S_3$ triglycerides, with S meaning $C_{16}$ and $C_{18}$ acids.

An Example of such $C_{16+}$ fat (B) is e.g. an interesterified mixture of 80wt% fully hardened cottonseed oil and 20wt% unhardened cottonseed oil.

In a preferred embodiment $C_{16+}$ fat (B) comprises fat ($B_1$) that has an $S_3$ content of 60-100wt%, especially 80-100wt%. Examples of such fat ($B_1$) are fully hardened liquid oils, e.g. fully hardened soybean oil, fully hardened rapeseed oil etc and mixtures of such oils. Particularly preferred fats $B_1$ are fully hardened palm oil, fully hardened palm fraction, e.g. stearin, mixtures thereof and mixtures of at least 50wt% of such fully hardened palm based fat with up to 50wt% of fully hardened liquid oil. By fully hardened is meant an oil or fat that has been hydrogenated to an iodine value (I.V.) below 10, preferably below 5, especially of 0-3.

In another preferred embodiment $C_{16+}$ fat (B) comprises palm stearin ($B_2$). A stearin fraction is the part of an oil obtained from a fractionation process by removing at least a part of the lower melting triglycerides from the oil. Preferably the palm oil stearin ($B_2$) employed has been obtained from a fractionation carried out such that the palm stearin has a slip melting point of at least 45°C, preferably of 48-54°C, especially of 50-53°C.

In a particularly preferred embodiment $C_{16+}$ fat (B) comprises both fat ($B_1$) and ($B_2$). It is especially preferred for $C_{16+}$ fat (B) to consist of 30-90wt% of palm stearin ($B_2$) and 10-70wt% of fat ($B_1$). Although we do not wish to be bound by theory, we believe that the balance of $C_{16}$ and $C_{18}$ acids together with the presence of both fully saturated triglycerides which ideally comprise significant amounts of both $C_{16}$ and $C_{18}$ acids, and SUS triglycerides and in particular POP triglycerides provided by the palm stearin, makes a very favourable contribution towards obtaining a good lamination fat product with improved temperature tolerance. (U indicates cis-unsaturated fatty acids, O indicates oleic acid, P indicates palmitic acid ($C_{16}$)). The amount of $C_{16+}$ fat in the product preferably is 15-45wt%, more preferably 20-40wt%.

The fat of the fatphase preferably comprises 10-35wt% $H_3$ triglycerides, more preferably 15-30wt%, especially 18-25wt%. This includes the $H_3$ contributed by $C_{16+}$ fat (B) as well as the $H_3$ triglycerides possibly contributed by the other fat components to the fat of the fatphase. It is particularly preferred for the fat of the fatphase to contain 10-35wt%, more preferably 15-30wt%, especially 18-25wt% $S_3$ triglycerides.

To obtain optimal results we found that, apart from the use of a $C_{16+}$ fat, the use of a second structure contributing fat (C) or (D) is advantageous. These fats (C) and/or (D) should be present in an amount such that the fat of the fatphase comprises in total more than 0wt% of (C+D). Preferably, the fat of the fatphase comprises at least 0.5wt%, more preferably at least 2wt%, especially 3-10wt% $H_2M$ triglycerides. Preferably the $H_2M$ fat (C) is a fat that contains at least 20wt% $H_2M$ triglycerides, more preferably 25-45wt% especially 30-40wt% $H_2M$ triglycerides. M indicates saturated $C_8$, $C_{10}$, $C_{12}$ and $C_{14}$ fatty acid residues. Preferably M consists for 80-100wt%, especially 90-100wt% of $C_{12}$ and $C_{14}$ acids. The SAFA content of the $H_2M$ fat (C) preferably is at least 70wt%, more preferably 80-100wt%. An example of such a $H_2M$ fat (C) is fully hardened, high lauric acid residues containing rapeseed oil. Preferably $H_2M$ fat (C) is an interesterified mixture of lauric fat and a $C_{16+}$ fat. For this purpose the same fats can be used as described above for the $C_{16+}$ (B). For example palm stearin with a slip melting point of e.g. 52°C, or fully hardened palm oil or palm stearin can be used. As lauric fat e.g. palmkernel oil, coconut oil, stearin fractions of such oils, such oils which have been hydrogenated, and mixtures of such oils can be used. The mixture that is interesterified comprises preferably 30-80%, more preferably 40-70% of the lauric fat, the balance consisting of the $C_{16+}$ fat. The interesterification can be a random or an enzymatic interesterification. Fractions of such interesterified mixtures, e.g. a stearin or a mid fraction, can be employed as well, but because of the costs involved this is preferably not done. Very good results were obtained with the use as $H_2M$ fat (C) of an interesterified mixture of 40-60wt% of fully hardened palmkernel oil or fully hardened palmkernel olein fraction and 60-40wt% of fully hardened palm oil. The amount of $H_2M$ fat (C) in the fat preferably is 4-30wt%, especially 10-22wt%.

The triglyceride content of fats, in particular the $H_3$, $S_3$ and $H_2M$ contents of fats can be evaluated using methods well known in the art, e.g. using FAME GLC combined with silverphase HPLC, Carbonnumber analysis and/or 2-position analysis, together with knowledge of the type of fat (e.g. vegetable) raw materials and the modification techniques (random or 1,3 specific interesterification, with or without fractionation) employed. Silverphase HPLC and Carbonnumber analyses can be carried out as described in JAOCS (1991), 68(5), 289-293 and EP 78568, respectively 2-position analysis is described in A.O.C.S. Official Method Ch 3-91, 1-4.

As used herein $X_3$ indicates triglycerides containing 3 X-fatty acid residues. $X_2Y$ indicates triglycerides comprising 2 X-acids and 1 Y acid irrespective of which acid is esterified to which position on the glycerol moiety. The notation XYX, XYY or XYZ is employed to indicate triglycerides containing the 3 mentioned fatty acids and having a Y acid esterified on the 2-position of the glycerol moiety but irrespective of which of the remaining 2 acids occupies the 1-position and which the 3-position of the glycerol moiety.

The fat composition can also comprise other fat (D) having a slip melting point of at least 38°C, preferably of 40-46 °C. As such fat for example palm oil and/or palm olein partially hydrogenated to the indicated slip melting point can be used. Care should be taken however that the use of such partially hydrogenated components does not cause the trans unsaturated fatty acid content of the fat to become too high. Preferably, the amount of such other fat does not exceed 20wt%. Specifically it is preferred not to incorporate lauric fat such as coconut oil or palmkernel oil whether hardened and/or fractionated or not, and/or palm oil or palm olein in the product. We found that these oils can adversely affect the temperature tolerance of the resulting lamination fat product. Therefore, if such palm oil, palm olein or lauric fat is incorporated via fat D, preferably their combined amount of the fat composition preferably does not exceed 20%, more preferably it is less than 10%, while most preferably such fats are not incorporated at all. This preferred absence only applies to components as specified here. As described above, the presence of lauric acid residues is essential in $H_2M$ fat (C), while palm oil (and also palm olein) are very suitable starting materials for preparing both $H_2M$ fat (C) and $C_{16+}$ fat (B) as well as for preparing components that can be incorporated in substantial amounts without adverse effect on temperature tolerance via fat (D).

Very good results can be obtained if the fat of the fatphase of the lamination fat product comprises:

45-60wt% liquid oil (A)
20-40wt% $C_{16+}$ fat (B)
10-30wt% $H_2M$ fat (C)
0-20wt% other fat (D)

Throughout this specification, the terms "oil" and "fat" are used interchangeably. Parts, percentages and proportions are by weight unless indicated otherwise. Amounts of fatty acid residues of a fat are expressed with respect to the total amount of fatty acid residues of said fat.

The fat phase composition of the lamination fat product may comprise apart from fat usual minor components e.g. monoglycerides, lecithin, β-carotene colourant, flavour, vitamins etc. Such components often comprise the active material dissolved in oil. However, the oil thus contributed to the fat of the fat phase represents typically an insignificant amount, e.g. less than 5wt%, usually 0-3wt%. The aqueous phase composition, if any, may comprise apart from water, e.g. salt, milk constituents, flavour, preservative, food acid and the like. Preferably the lamination fat product comprises 60-100wt% fat phase composition, constituting the continuous phase of the product, and up to 40wt%, if any, of aqueous phase composition, present as dispersed phase. More preferably, the product comprises 70-90wt% of continuous fat phase, the balance consisting of dispersed aqueous phase.

The product can be prepared in conventional manner. Typically, fat phase composition and aqueous phase composition, if any, are prepared separately. They may be premixed or fed into the processing line separately e.g. by a multiheaded dosing pump. In either case, it is preferably ensured that the fat composition is at a temperature at which it comprises substantially no solid fat. Ideally it is kept at a temperature of about 8-15°C above the slip melting point of the fat. In the processing line, e.g. a Votator® or Schroöder® line, the combined fat phase composition and aqueous phase composition, if any, are subjected to cooling and working to obtain a fine dispersion of aqueous phase into fat phase, to cause crystallization of fat to occur and to achieve a suitable fat crystal network. The processing line suitably comprises one or more scraped surface heat exchanger, so-called A-units. The last unit of the processing line preferably is a resting tube, a so-called B-unit. The line may further include one or more stirred crystallizers, so-called C-units, e. g. before the B-unit. Usually however, the presence of such C-units is not necessary. Especially if such C-units are not present, it is desirable for the B-unit to comprise one or more sieve plates. From the B-unit the product is suitably passed through an extrusion mouth provided with cutting means to obtain blocks or sheets of product suitable for packing. Packing can e.g. be done in bag-in-box or by wrapping e.g. in parchment paper, and then packing one or more pieces of wrapped product in e.g. a cardboard outer. Preferably the dimension of the units of the line, the chilling applied and the throughput or residence time are chosen such that the product leaving the line, ready for packing, has a content of solid fat being at least 50%, more preferably 60-100%, especially 70-100% of the crystallisable fat at the intended storage temperature.

The firmness of the product at x°C can suitably be characterised by means of the St x-value, the Stevens value at x°C. To measure the Stevens values, the product is conditioned for 3 days at 20°C and then for 24 hours at the measuring temperature. The measurement is carried out with a Stevens-LFRA Texture Analyzer (ex Stevens Advanced Weighing Systems, Dunmore, UK) using a 4.4 mm ϕ cylinder, set at 10 mm penetration depth and operated "normal" with 2.0 mm/s penetration rate.

The firmness of the product at 20°C as characterised by the St 20 value preferably is 150-950, more preferably 250-800, most preferably 300-600. For good temperature tolerance, the ratio (St15-St25)/St20 preferably is less than 0.9, more preferably it is 0.1-0.7, especially 0.2-0.5. Such firmness characteristics can readily be achieved by using a fat as described above and applying regular GMP processing conditions. Under such conditions, normally the product will also have good plasticity. Further guidance for good plasticity is provided by the ratio St $x/(Nx)^2$ for x in the range of 15-25°C. St $x/(Nx)^2$ preferably is in the range 0.1-0.4, more preferably 0.15-0.38 especially 0.20-0.35. At high values of St $x/(Nx)^2$ the product is likely to be brittle rather than plastic. At low values of St $x/(Nx)^2$ the product usually is plastic but it may also be sticky, which makes handling the product and making the dough cumbersome. If the St $x/(Nx)^2$ value is suboptimal this can be corrected by optimising the processing conditions as is well known to the man skilled in the art.

The present fat product gives the advantage of improved temperature tolerance, irrespective of which method is used for making the laminated dough, e.g. for the French, German and Dutch methods which are well known in the art.

EXAMPLES

In the following examples, the baking test (puff pastry) is carried out as follows.

| Composition pre-dough: | |
|---|---|
| Flour | 1000 parts |
| Water | about 560 parts<br>adapted to the Farinograph water<br>absorption value (500 FU) minus 4% |
| Salt | 20 parts |
| Fat for pré-dough | 150 parts |

The pre-dough ingredients are mixed for 4 minutes and the dough is put to rest for 10 minutes. 800 parts of lamination fat product is rolled out to a square sheet of 10 mm thickness. The pre-dough is rolled out to a square sheet of 8 mm thickness. The sheet of lamination fat product is placed on the pre-dough and the pre-dough is folded around it. The composite dough is rolled out with a lamination machine to subsequent thicknesses of 30, 25, 15, 12 and 10 mm. The rectangular piece of dough is folded in 3 and turned over 90°. The dough is rolled out to 30, 25, 15, 12 and 10 mm thickness, and the dough is folded in 3 again and turned over 90°. This rolling, folding and turning is called "2 half turns". The dough is allowed to rest for 45 minutes. The dough is given another "2 half turns", allowed to rest, and once more 2 half turns with a subsequent rest.

To make the patties, the dough is rolled out via positions 30 and 25 to 15 mm thickness, turned 90° and further rolled out via 10 and 8 mm to 6 mm, turned 90° and rolled out to 5, 4.5 and 4 mm thickness. The dough is divided in 2 parts. One part is lightly sprayed with a small amount of water to make it sticky. From the dry part of the dough the ring shaped top of the patties is cut out and from the wet part, the bottom part of the patties is cut out. The rings are gently pressed on the bottom parts of the patties. The dough is perforated to prevent irregular lift, given a final rest of 60 minutes and then baked for 20 minutes in an oven pre-heated to 240°C.

Example 1

$H_2M$ fat was prepared by randomly interesterifying a mixture of 50 parts fully hardened palm oil and 50 parts fully hardened palmkernel fat in a conventional manner using a chemical catalyst. The $H_2M$ content was calculated from the fatty acid composition as determined with FAME GLC and Carbon Number analysis using the knowledge that the fatty acid distribution was random. The $H_2M$ content of the fat was 35%.

A fat blend was prepared from

| | |
|---|---|
| 54.7 parts | soyabean oil |
| 12.0 parts | fully hardened palm oil (slip melting point 58°C, I.V. < 3) |
| 18.3 parts | dry fractionated palm stearin having a slip melting point of 52°C |
| 15.0 parts | of the $H_2M$ fat |

The fatblend had the following N-values

| | |
|---|---|
| $N_{10}$ | 44.4 |
| $N_{15}$ | 40.8 |
| $N_{20}$ | 36.2 |
| $N_{25}$ | 31.0 |
| $N_{30}$ | 25.2 |
| $N_{35}$ | 20.9 |
| $(N_{15} - N_{25})/N_{20} = 0.27$ | |

It contained 47% SAFA, the trans fatty acid content was less than 1%.

| Fat phase composition: | |
|---|---|
| 82.85 parts | fatblend |

(continued)

| Fat phase composition: | |
|---|---|
| 0.15 parts pm | monoglyceride colourant |

| Aqueously phase composition: | |
|---|---|
| 16 parts | water |
| 1 part | salt |
| pm | citric acid to pH 4.5, preservative. |

The fat phase and aqueous phase composition were mixed and kept at a temperature of 65°C. The lamination fat product was produced from this premix in a conventional manner on a Votator® line of an A-unit, a C-unit providing a residence time of 3 minutes and a B unit. The product at the end of the line had a temperature of about 20°C. Its consistency was good. The product was stored at 20°C.

The Stevens values after 1 week storage were:

| St 15 | 470 |
|---|---|
| St 20 | 403 |
| St 25 | 301 |
| (St15-St25)/St20 | 0.42 |

The product was evaluated in the baking test with a soft and a hard flour (Kolibri® and Pelikaan® both ex Meneba, Netherlands) at 15, 20 and 25°C during dough making.

For comparison a conventional pastry margarine was prepared having the same aqueous phase composition and using a fatphase composition similar to that of the commercial product with the most flat N-line, consisting of 20% soybean oil, 30% palm oil and 50% palm oil hydrogenated to a slip melting point of 44°C. The process conditions applied were the same. The fat and the resulting product had the following properties:

| N10 | 61.5 |
|---|---|
| N20 | 46.3 |
| N30 | 26.0 |
| N35 | 16.0 |
| $(N_{15}-N_{25})/N_{20}$ | 0.41 |
| St15 | 502 |
| St20 | 332 |
| St25 | 137 |
| (St15-St25)/St20 | 1.1 |

The gravity index (G.I., height of the patties after baking in mm divided through the weight after baking in grams) of the patties was:

| G.I. (mm/g) | Ex. 1 | Comparison 1 | % difference |
|---|---|---|---|
| Kolibri | | | |
| 15°C | 1.09 | 1.10 | -1% |
| 20°C | 1.11 | 0.95 | 14% |
| 25°C | 1.01 | 0.79 | 22% |

(continued)

| G.I. (mm/g) | Ex. 1 | Comparison 1 | % difference |
|---|---|---|---|
| Pelikaan | | | |
| 15°C | 1.25 | 1.33 | -6% |
| 20°C | 1.23 | 1.20 | 2% |
| 25°C | 1.21 | 0.97 | 20% |

These findings were consistent with the baker's observations: The product of the invention performed well and practically constant over the range of 15-25°C. The reference was comparable at 15-20°C, but became too soft and gave less good results at 25°C.

The products were also evaluated with the so-called pencil method for making pastries. In this method the lamination fatproduct is cut into pieces of about 4x1x1 cm. The pieces are added to the flour and water, and mixed such that the pieces of fat remain intact to a considerable degree. The doughs are then rested and laminated essentially as described above. In stead of Pelikaan, Ibis® flour ex Meneba was used. The following results were obtained.

| G.I. (mm/g) | Ex. 1 | Comparison 1 | % difference |
|---|---|---|---|
| Kolibri | | | |
| 15°C | 1.30 | 1.26 | 3% |
| 20°C | 1.42 | 1.26 | 11% |
| 25°C | 1.40 | 1.06 | 24% |
| Ibis | | | |
| 15°C | 1.67 | 1.46 | 13% |
| 20°C | 1.52 | 1.27 | 16% |
| 25°C | 1.81 | 0.35 | 25% |

The reproducibility of this method is less good, but direct comparison usually gives reliable results. In these trials also at 15°C the difference between the example and the comparison is not very big, but at 25°C the product according to the invention is clearly better.

Examples 2-5

Lamination fat products were prepared as described in Example 1, using the fat blend compositions as given in table 1, and using a Votator line of 2 A-units and a B-unit. The B-unit contained sieveplates the holes of which corresponded to 3% of the surface area. The product at the end of the line had a temperature of about 20°C. Analytical data on the fatblends and on the resulting lamination fat products are also included in Table 1.

Table 1

| | Ex. 2 | Ex. 3 | Ex.4 | Ex. 5 | Comp. 2 |
|---|---|---|---|---|---|
| Composition | | | | | |
| Soyabean oil | 49.8 | 36.0 | 36.0 | 48.8 | 33.0 |
| Fully hardened palm oil | 6.0 | 10.0 | 1.0 | 7.0 | - |
| Palm stearin | 22.2 | 15.0 | 53.0 | 12.2 | 67.0 |
| $H_2M$ fat | 22.0 | 15.0 | 10.0 | 10.0 | - |
| Coconut oil | - | 1.0 | - | - | - |
| Palm oil | - | 23.0 | - | - | - |
| Hardened palm oil* | - | - | - | 22.0 | - |
| Fatblend | | | | | |
| N10 | 45.3 | 50.3 | 50.3 | 47.4 | 48.3 |
| N15 | 40.6 | 44.2 | 43.6 | 42.2 | 42.5 |
| N20 | 36.2 | 38.0 | 37.3 | 36.9 | 36.4 |
| N25 | 31.1 | 32.2 | 31.0 | 31.3 | 30.1 |
| N30 | 25.5 | 26.3 | 24.8 | 25.7 | 24.6 |
| N35 | 19.7 | 20.9 | 18.5 | 19.6 | 18.9 |
| (N15-N25)N20 | 0.26 | 0.32 | 0.34 | 0.30 | 0.34 |
| H2M | 7.8 | 5.3 | 3.5 | 3.5 | 0.6 |
| S3 | 20 | 21 | 25 | 16 | 28 |
| Trans | <1% | <1% | <1% | 6% | <1% |
| Fatproduct** | | | | | |
| St 15 | 488 | 626 | 583 | 557 | 611 |
| St 20 | 480 | 556 | 498 | 500 | 442 |
| St 25 | 315 | 311 | 209 | 286 | 258 |
| (St15-St25) /St20 | 0.36 | 0.57 | 0.75 | 0.54 | 0.80 |

* Palm oil hydrogenated to a slip melting point of 44°C.

** Measured 4 days after production.

The baking test was carried out with the dough making at 15°C and at 25°C.

The baker found the products of Ex. 3 and of Comparison 2 somewhat harder than desirable at 15°C.

The height of the resulting patties (in mm) and the height divided by the weight (in grams), the so-called gravity index (G.I.), were measured. The results are shown in Table 2. Also the difference in the results between 15°C and 25°C are given.

Table 2

| | Ex. 2 | Ex. 3 | Ex. 4 | Ex. 5 | Comp. 2 |
|---|---|---|---|---|---|
| Height (mm) | | | | | |
| 15°C | 38.3 | 40.3 | 41.0 | 42.5 | 48.9 |
| 25°C | 36.9 | 31.4 | 33.3 | 34.7 | 30.1 |
| Difference | 1.4 | 8.9 | 7.7 | 7.8 | 18.8 |
| | | | | | |
| G.I. (mm/g) | | | | | |
| 15°C | 1.38 | 1.43 | 1.55 | 1.55 | 1.72 |
| 25°C | 1.39 | 1.17 | 1.18 | 1.31 | 1.19 |
| Difference | -0.01 | 0.26 | 0.37 | 0.24 | 0.53 |

The shape of the patties from Comparison 2 prepared at 15°C was irregular, those of example 4 were not fully round while those of the other examples were good. From the patties prepared from the dough made at 25°C, those of comparison 2 and example 5 were not completely round, while those of the other examples were good.

Although all fat products had lower (N15-N25)/N20 and (St 15-St 25)/St 20 values than commonly found for lamination fat products, while the values for comparison 2 were very similar to those of Example 4, the results with Comparison 2 were less good than for the examples. The difference in patty height and gravity index between 15°C and 25°C were clearly bigger than those for the examples.

The results were best for example 2. The performance of example 3 was not that good because of the high combined content of palm oil and coconut oil. Example 4 gave suboptimal results because the amount of fat B1 (fully hardened palm oil) was low while the total amount of fat B was high. Also the amount of $H_2M$ triglycerides is lower than optimal. Example 5 is suboptimal because both the amounts of fat B and of $H_2M$ triglycerides are somewhat low. A further disadvantage of Ex. 5 is its trans content. The fatblends had been designed to be nearly constant in SAFA + Trans content. All blends contained 51 ± 2% SAFA + Trans. From a nutritional point of view based on the overall fatty acid composition, example 2 and 5 are the most attractive, which is mainly attributable to the high content of soyabean oil which provides all-cis polyunsaturated acids.

Example 6

A fat blend was prepared from

| | |
|---|---|
| 52 parts | soyabean oil |
| 11.0 parts | fully hardened palm oil (slip melting point 58°C, I.V. < 3) |
| 20.0 parts | dry fractionated palm stearin having a slip melting point of 52°C |
| 17.0 parts | hardened palm oil m.pt 44 °C |

The fatblend had the following N-values

| | | |
|---|---|---|
| $N_{10}$ | 44.4 | 42.9 |
| $N_{15}$ | 40.8 | 38.8 |
| $N_{20}$ | 36.2 | 33.9 |
| $N_{25}$ | 31.0 | 28.9 |
| $N_{30}$ | 25.2 | 24.9 |
| $N_{35}$ | 20.9 | 19.8 |
| $(N_{15} - N_{25})/N_{20} = 0.29$ | | |

It contained 40% SAFA, the trans fatty acid content was less than 4.0%.

| Fat phase composition: | |
|---|---|
| 82.85 parts | fatblend |
| 0.15 parts | monoglyceride |
| pm | colourant |

| Aqueously phase composition: | |
|---|---|
| 16 parts | water |
| 1 part | salt |
| pm | citric acid to pH 4.5, preservative. |

The fat phase and aqueous phase composition were mixed and kept at a temperature of 65°C. The lamination fat product was produced from this premix in a conventional manner on a Votator® line of an A-unit, a C-unit providing a residence time of 3 minutes and a B unit. The product at the end of the line had a temperature of about 20°C. Its consistency was good. The product was stored at 20°C.

The Stevens values after 1 week storage were:

| St 15 | 410 |
|---|---|
| St 20 | 345 |
| St 25 | 283 |
| (St15-St25)/St20 | 0.36 |

The product was evaluated in the baking test with a soft and a hard flour (Kolibri® and Pelikaan® both ex Meneba, Netherlands) at 15, 20 and 25°C during dough making.

For comparison a conventional pastry margarine was prepared having the same aqueous phase composition and using a fatphase composition similar to that of the commercial product with the most flat N-line, consisting of 20% soybean oil, 30% palm oil and 50% palm oil hydrogenated to a slip melting point of 44°C. The process conditions applied were the same. The fat and the resulting product had the following properties:

| N10 | 61.5 |
|---|---|
| N20 | 46.3 |
| N30 | 26.0 |
| N35 | 16.0 |
| $(N_{15}-N_{25})/N_{20}$ | 0.41 |
| St15 | 502 |
| St20 | 332 |
| St25 | 137 |
| (St15-St25)/St20 | 1.1 |

The gravity index (G.I., height of the patties after baking in mm divided through the weight after baking in grams) of the patties was:

| G.I. (mm/g) | Ex. 6 | Comparison 1 | % difference |
|---|---|---|---|
| Kolibri | | | |
| 15°C | 1.15 | 1.10 | 4% |
| 20°C | 1.20 | 0.95 | 21% |
| 25°C | 1.10 | 0.79 | 28% |
| Pelikaan | | | |
| 15°C | 1.36 | 1.33 | 2% |
| 20°C | 1.32 | 1.20 | 9% |
| 25°C | 1.25 | 0.97 | 22% |

These findings were consistent with the baker's observations: The product of the invention performed well and practically constant over the range of 15-25°C. The reference was comparable at 15-20°C, but became too soft and gave less good results at 25°C.

The products were also evaluated with the so-called pencil method for making pastries. In this method the lamination fatproduct is cut into pieces of about 4x1x1 cm. The pieces are added to the flour and water, and mixed such that the pieces of fat remain intact to a considerable degree. The doughs are then rested and laminated essentially as described above. In stead of Pelikaan, Ibis® flour ex Meneba was used. The following results were obtained.

| G.I. (mm/g) | Ex. 6 | Comparison 1 | % difference |
|---|---|---|---|
| Kolibri | | | |
| 15°C | 1.35 | 1.26 | 6% |

(continued)

| G.I. (mm/g) | Ex. 6 | Comparison 1 | % difference |
|---|---|---|---|
| Kolibri | | | |
| 20°C | 1.50 | 1.26 | 16% |
| 25°C | 1.48 | 1.06 | 28% |
| Ibis | | | |
| 15°C | 1.70 | 1.46 | 14% |
| 20°C | 1.60 | 1.27 | 21% |
| 25°C | 1.88 | 1.35 | 28% |

The reproducibility of this method is less good, but direct comparison usually gives reliable results. In these trials also at 15°C the difference between the example and the comparison is not very big, but at 25°C the product according to the invention is clearly better.

**Claims**

1. Lamination fat product having a continuous fat phase and optionally a dispersed aqueous phase, wherein the fat of the fat phase comprises:

   * less than 10wt% trans unsaturated fatty acid residues
   * 25-70wt%, preferably 30-65wt% liquid triglyceride oil (A) that does not contain solid fat at 20°C and that contains at least 70 wt.% cis unsaturated fatty acid residues
   * at least 10wt% $C_{16+}$ fat (B) having a saturated fatty acid content of at least 60wt% and comprising at least 30wt% $H_3$ triglycerides wherein H indicates $C_{16}$, $C_{18}$, $C_{20}$ and $C_{22}$ acids
   * optionally a $H_2M$ fat (C), preferably in an amount such that the fat of the fatphase comprises at least 0.5wt%, more preferably at least 2wt% $H_2M$ triglycerides wherein M indicates $C_8$, $C_{10}$, $C_{12}$, and $C_{14}$ acids, and
   * optionally up to 25wt% other fat (D) having a slip melting point of at least 38°C,
   * while the total of fats (C) and (D) is always more than 0wt%.

   and wherein the fat has solid fat contents of

   * $N_{20}$= 28-50
   * $N_{35}$ = 10-23
   * $(N_{15}-N_{25})/N_{20} \leq 0.40$

2. Fat product according to claim 1 wherein the $C_{16+}$ fat (B) comprises fat $(B_1)$ having an $S_3$ content of 60-100wt% wherein S indicates $C_{16}$ and $C_{18}$ acids.

3. Fat product according to claim 1 or claim 2 wherein the $C_{16+}$ fat (B) comprises palm stearin $(B_2)$.

4. Fat product according to claims 2 and 3 wherein fat (B) consists of 30-90wt% of palm stearin $(B_2)$ and 10-70wt% of fat $(B_1)$.

5. Fat product according to any one of claims 1-4 wherein fat (C) has a $H_2M$ content of at least 20wt%, preferably 25-45wt%.

6. Fat product according to any one of claims 1-5 wherein the fat comprises 10-35wt% $H_3$ triglycerides, preferably 10-35wt% $S_3$ triglycerides.

7. Fat product according to any one of claims 1-6 wherein the fat comprises:

45-60wt% liquid oil (A)
20-40wt% $C_{16+}$ fat (B)
10-30wt% $H_2M$ fat (C)
0-20wt% other fat (D)

**8.** Fat product according to any one of claims 1-7 wherein the fat has solid fat contents of:
$N_{20}$ = 28-42

**9.** Fat product according to any one of claims 1-8 wherein $(N_{15}-N_{25})/N_{20}$ is less than 0.35, preferably 0.20-0.30.

**10.** Fat product according to any one of claims 1-9 comprising 60-100wt% continuous fat phase and 0-40wt% dispersed aqueous phase.

**11.** Use of a fat product according to any one of claims 1-10 in the preparation of a laminated dough.


**Patentansprüche**

**1.** Schichtfettprodukt mit einer kontinuierlichen Fettphase und gegebenenfalls einer dispergierten wässerigen Phase, wobei das Fett der Fettphase folgendes umfaßt:

* weniger als 10 Gewichts-% trans-ungesättigte Fettsäurereste
* 25-70 Gewichts-%, vorzugsweise 30-65 Gewichts-% flüssiges Triglyceridöl (A), das bei 20°C kein festes Fett enthält und das mindestens 70 Gewichts-% cis-ungesättigteFettsäurereste enthält,
* mindestens 10 Gewichts-% $C_{16+}$-Fett (B) mit einem Gehalt an gesättigten Fettsäuren von mindestens 60 Gewichts-% und mit mindestens 30 Gewichts-% $H_3$-Triglyceriden, wobei H $C_{16}$-, $C_{18}$-, $C_{20}$- und $C_{22}$-Säuren bezeichnet,
* gegebenenfalls ein $H_2M$-Fett (C), vorzugsweise in einer Menge, so daß das Fett der Fettphase mindestens 0,5 Gewichts-%, bevorzugter mindestens 2 Gewichts-% $H_2M$-Triglyceride umfaßt, wobei M $C_8$-, $C_{10}$-, $C_{12}$- und $C_{14}$-Säuren bezeichnet, und
* gegebenenfalls bis zu 25 Gewichts-% anderes Fett (D) mit einem Fließschmelzpunkt von mindestens 38°C,
* während die Gesamtmenge der Fette (C) und (D) immer mehr als 0 Gewichts-% ist,

und wobei das Fett einen Gehalt an festem Fett von

* $N_{20}$ = 28-50
* $N_{35}$ = 10-23
* $(N_{15}-N_{25})/N_{20} \leq 0,40$

aufweist.

**2.** Fettprodukt nach Anspruch 1, wobei das $C_{16+}$-Fett (B) Fett ($B_1$) mit einem $S_3$-Gehalt von 60-100 Gewichts-% umfaßt, wobei S $C_{16}$- und $C_{18}$-Säuren bezeichnet.

**3.** Fettprodukt nach Anspruch 1 oder Anspruch 2, wobei das $C_{16+}$-Fett (B) Palmstearin ($B_2$) umfaßt.

**4.** Fettprodukt nach den Ansprüchen 2 und 3, wobei das Fett (B) aus 30-90 Gewichts-% Palmstearin ($B_2$) und 10-70 Gewichts-% Fett ($B_1$) besteht.

**5.** Fettprodukt nach einem der Ansprüche 1-4, wobei das Fett (C) einen $H_2M$-Gehalt von mindestens 20 Gewichts-%, vorzugsweise 25-45 Gewichts-% aufweist.

**6.** Fettprodukt nach einem der Ansprüche 1-5, wobei das Fett 10-35 Gewichts-% $H_3$-Triglyceride, vorzugsweise 10-35 Gewichts-% $S_3$-Triglyceride umfaßt.

**7.** Fettprodukt nach einem der Ansprüche 1-6, wobei das Fett folgendes umfaßt:

45-60 Gewichts-% flüssiges Öl (A)

20-40 Gewichts-% $C_{16+}$-Fett (B)
10-30 Gewichts-% $H_2M$-Fett (C)
0-20 Gewichts-% anderes Fett (D).

8. Fettprodukt nach einem der Ansprüche 1-7, wobei das Fett einen Gehalt an festem Fett von:
$N_{20}$ = 28-42
aufweist.

9. Fettprodukt nach einem der Ansprüche 1-8, wobei $(N_{15}-N_{25})/N_{20}$ geringer als 0,35, vorzugsweise 0,20-0,30 ist.

10. Fettprodukt nach einem der Ansprüche 1-9 mit 60-100 Gewichts-% kontinuierlicher Fettphase und 0-40 Gewichts-% dispergierter wässeriger Phase.

11. Verwendung eines Fettprodukt nach einem der Ansprüche 1-10 bei der Herstellung eines Schichtteigs.

**Revendications**

1. Produit gras de laminage présentant une phase grasse continue, et éventuellement une phase aqueuse dispersée, dans lequel la graisse de la phase grasse comprend :

   * moins de 10 % en poids de résidus d'acides gras insaturés trans,

   * entre 25 et 70 % en poids, de préférence entre 30 et 65 % en poids d'huile de triglycérides liquide, qui ne contient pas de graisse solide à 20°C et qui contient au moins 70 % en poids de résidus d'acides gras insaturés cis,

   * au moins 10 % en poids de graisse $C_{16+}$ (B) présentant une teneur en acides gras saturés d'au moins 60 % en poids et comprenant au moins 30 % en poids de triglycérides $H_3$, dans lequel H indique des acides à $C_{16}$, $C_{18}$, $C_{20}$, $C_{22}$,

   * éventuellement une graisse $H_2M$ (C), de préférence en une quantité telle que la graisse de la phase grasse comprend au moins 0,5 % en poids, de préférence, au moins 2 % en poids de triglycérides $H_2M$, dans lequel M indique des acides à $C_8$, $C_{10}$, $C_{12}$ et $C_{14}$, et

   * éventuellement jusqu'à 25 % en poids d'une autre graisse (D) ayant un point de fusion descendant d'au moins 38 °C,

   * alors que le total des graisses (C) et (D) est toujours supérieur à 0 % en poids,

   et dans lequel la graisse présente une teneur en graisse solide de

   * $N_{20}$ = 28-50

   * $N_{35}$ = 10-23

   * $(N_{15} - N_{25})/N_{20} \leq 0,40$.

2. Produit gras selon la revendication 1, dans lequel la graisse $C_{16+}$ (B) comprend une graisse $(B_1)$ présentant une teneur en $S_3$ de 60 à 100 % en poids, dans laquelle S indique des acides à $C_{16}$ et $C_{18}$.

3. Produit gras selon la revendication 1 ou la revendication 2, dans lequel la graisse $C_{16+}$ (B) comprend une stéarine de palme $(B_2)$.

4. Produit gras selon les revendications 2 et 3, dans lequel la graisse (B) consiste en 30 à 90 % en poids de stéarine de palme $(B_2)$ et 10 à 70 % en poids de graisse $(B_1)$.

5. Produit gras selon l'une quelconque des revendications 1 à 4, dans lequel la graisse (C) présente une teneur en

$H_2M$ d'au moins 20 % en poids, de préférence entre 25 et 45 % en poids.

6. Produit gras selon l'une quelconque des revendications 1 à 5, dans lequel la graisse comprend 10 à 35 % en poids de triglycérides $H_3$, de préférence entre 10 et 35 % en poids de triglycérides $S_3$.

7. Produit gras selon l'une quelconque des revendications 1 à 6, dans lequel la graisse comprend :

   45 à 60 % en poids d'huile liquide (A)

   20 à 40 % en poids de graisse $C_{16+}$ (B)

   10 à 30 % en poids de grasse $H_2M$ (C)

   0 à 20 % en poids d'autre graisse (D)

8. Produit gras selon l'une quelconque des revendications 1 à 7, dans lequel la graisse présente une teneur en graisse solide de
   $N_{20} = 28 - 42$.

9. Produit gras selon l'une quelconque des revendications 1 à 8, dans lequel $(N_{15} - N_{25})/N_{20}$ est inférieur à 0,35, et de préférence compris entre 0,20 et 0,30.

10. Produit gras selon l'une quelconque des revendications 1 à 9 comprenant 60 à 100 % en poids de phase grasse continue et 0 à 40 % en poids de phase aqueuse dispersée.

11. Utilisation d'un produit gras selon l'une quelconque des revendications 1 à 10 dans la préparation d'une pâte laminée.